# EUROPÄISCHE PATENTSCHRIFT

(11) **EP 4 635 379 B1**
(45) Veröffentlichungstag und Bekanntmachung des Hinweises auf die Patenterteilung: **14.10.2026**
(21) Anmeldenummer: 25168933.7
(22) Anmeldetag: 07.04.2025
(51) Int. Cl.: A47J 37/07

(54) **GASKLAPPGRILL MIT INTEGRIERTEM SELBSTAUSKLAPPBAREM FLAMMBLECH**
GAS FOLDING GRILL WITH INTEGRATED SELF-UNFOLDING FLAME PLATE
GRIL PLIANT À GAZ AVEC PLAQUE DE FLAMME AUTO-DÉPLOYABLE INTÉGRÉE

(30) Priorität: 18.04.2024 DE 202024101947 U
(43) Veröffentlichungstag der Anmeldung: 22.10.2025
(73) Patentinhaber: Heilmann, Marc, 65462 Ginsheim-Gustavsburg (Rhineland Palatine) (DE)
(72) Erfinder: Heilmann, Marc, 65462 Ginsheim-Gustavsburg (Rhineland Palatine) (DE)
(74) Vertreter: Mackert, Andreas

(56) Entgegenhaltungen:
- WO-A1-2023/217778
- DE-U1- 202018 006 715
- DE-U1- 202020 105 000
- US-A1- 2022 257 054

## Beschreibung

Die Erfindung betrifft einen Gasklappgrill gebildet aus gelenkig miteinander verbundenen Bauteilen gemäß dem Oberbegriff des Anspruchs 1, wobei erfindungsgemäß ein selbstausklappendes Flammblech integriert ist.

Ein Flammblech in Grills dient dem Schutz eines Gasbrenners, um ein Verschmutzen der Gasaustrittsdüsen mit z.B. Fett oder verbranntem Grillgutrückständen zu verhindern.

Solche Flammbleche finden z.B. in Gasgrills, welche mit Rohrbrennern ausgestattet sind, Verwendung. Die Flammbleche sind entweder fest montiert oder werden vor dem Grillen in portable Gasgrills eingesetzt und müssen für den Zusammenbau wieder demontiert werden, da diese aus einem einzelnen starren Blechteil bestehen, das ein Zusammenlegen behindert.

Aus der Anmeldung DE 10 2018 109 739 A1 ist ein solcher portabler Gasgrill mit montierbarem starren Flammblech bekannt. Solche portablen Grillvorrichtungen werden gerne beim Camping, Angeln oder bei Wandertouren eingesetzt, weil sie sich schnell auf- und abbauen lassen. Hier ist eine Bauform offenbart, bei der die Bauteile zusammengesteckt den Grill bilden.

Weitere portable Grillvorrichtungen sind beispielsweise aus den Druckschriften DE 20 2018 006715 U1, WO 2023/217778 A1, DE 20 2020 105000 U1 und US 2022/257054 A1 bekannt.

Weitere portable Grillvorrichtungen sind faltbar ausgebildet wie beispielsweise offenbart in der Druckschrift KR202018002078U. Hier müssen keine Seitenwände oder Böden zusammengesteckt werden, wie bei anderen zerlegbaren Grills. Die Seitenteile werden mittels Scharnieren oder Lagerungen im oberen Abschlussstück gehalten. Die Bodenplatten werden mittels Zapfen in der dafür vorgesehenen Nut in den Seitenteilen geführt. Durch diese technische Ausführung baut sich der Grill bei einer Drehung um die eigene Achse von 180 Grad von alleine auf bzw. wieder ab. Es handelt sich hierbei um einen mit Kohle betriebenen Faltgrill.

Nachteilig an dieser oder ähnlich bekannten Grillvorrichtungen die gasbetrieben werden ist, dass das separat mitgeführte Flammschutzblech montiert werden muss. Dazu ist es notwendig den evtl. noch schmutzigen Grillrost komplett zu entfernen oder anzuheben und das Flammschutzblech zu positionieren. Beim Abbau ergibt sich ebenso das Problem, dass man den benutzten schmutzigen Grillrost wieder anheben oder entfernen muss, um das Flammschutzblech zu demontieren. Eine saubere Handhabung ist dadurch nicht möglich.

Beim Verstauen in einer Tasche oder ähnlichem muss man den Rost oder Flammschutzblech separat platzieren, was zum einen wieder zusätzlichen Platz in Anspruch nimmt und die Hände evtl. mit Fett und Verkohlungen verschmutzt, was gerade bei einem Ausflug in der Natur ohne fließendes Wasser nachteilig ist. Ebenso gibt es keinen extra Schutz für den benutzten Grillrost, um ihn sauber in einer Transporttasche zu verstauen. Dadurch verschmutzt man sich nach jedem Grillvorgang noch zusätzlich die Transporttasche, was einen zusätzlichen Arbeitsaufwand bei der Reinigung herbeiführt.

Der in Schutzanspruch 1 angegebenen Erfindung liegt die Aufgabe zu Grunde, einen Gasklappgrill mit Flammblech zu konstruieren, so dass das Flammblech nicht mehr aus dem Gasklappgrill entfernt oder in diesen eingesetzt werden muss, da es dort verbleibt und sich selbstständig beim Klappvorgang platzsparend mit auf und abbaut und sich dabei selbst positioniert.

Weiterhin soll die Ausführung der Erfindung es ermöglichen, einen Klappgrill ausgenommen vom Brennerrohr so zu gestalten, dass dieser sofort einsatzbereit ist, ohne noch etwas montieren zu müssen. Ebenso aufwandsfrei ist auch der Abbau zu erreichen.

Ebenso soll der benutzte Grillrost im zusammengeklappten Grill verbleiben können, ohne mit der Aufbewahrungstasche in Kontakt zu kommen.

Dieses Problem wird durch die in Schutzanspruch 1 aufgeführten Merkmale gelöst. Die Unteransprüche haben vorteilhafte Ausführungsformen zum Gegenstand.

Durch die Erfindung ist es möglich einen so genannten portablen Gasklappgrill so zu gestalten, dass dieser nach dem Aufklappen und Einfügen des Brennerrohres sofort einsatzfähig ist, ohne irgendetwas noch am Grill montieren zu müssen. Ebenso wird es ermöglicht, beim Einklappen nur den Rohrbrenner entfernen zu müssen ohne das Flammblech oder den Rost demontieren oder anfassen zu müssen.

Ermöglicht wird dies durch ein zumindest aus zwei Hälften bestehendes und mittels zumindest eines Scharniers verbundenes Flammblech, welches in einer vorteilhaften Bauform mittels einer Welle seitlich in zwei Führungsnuten variabel gehalten wird. Beim Aufklappen des Grills rutscht das flach geklappte gelenkige Flammblech in seine untere Position und positioniert sich durch die seitlich formgegebenen Seitenteile in eine abgewinkelte Endposition, wobei die freien Endkanten der Flammblechelemente unterhalb des diese verbindenden Scharniers mit Welle verlaufen und somit zwei schräge Ebenen bilden. Beim Umdrehen bzw. Zusammenklappen des Grills legt sich das gelenkige Flammblech wieder in seine flache Position, wodurch es im Klappgrill verbleiben kann.

Da in dieser Bauform das Flammblech über die Welle, die die zwei Flammblechhälften verbindet, auch im Gasklappgrill in vertikal verlaufenden Nuten gehalten und geführt ist, besteht die Notwendigkeit, diese Welle auch in diesen Führungsnuten zu sichern. Dies wird bewirkt zum einen durch abgewinkelte Enden dieser Welle, so dass diese sich nicht in Ihrer Längsachse aus den Führungsnuten heraus verschieben kann.

Durch das Aufklappen und Zusammenklappen des Gasklappgrills wie auch dessen Transport könnte es allerdings zu einer Verwindung dieser freien Enden kommen, die so doch aus den Führungsnuten gleiten könnte, weshalb es verschieden erfindungsgemäße Lösungen gibt, dies zu vermeiden. Es können Sicherungskörper an den abgewinkelten freien Enden der Welle vorgesehen sein, die breiter sind als die Führungsnuten und somit ein Abgleiten der Wellenenden aus diesen Führungsnuten verhindern. Diese Sicherungskörper sind lösbar ausgebildet, beispielsweise auf an den abgewinkelten Wellenenden angeordnetes Gewinde aufgeschraubt, und können so abgenommen werden, wenn das Flammblech beispielsweise zur Reinigung aus dem Gasklappgrill herausgenommen werden soll.

Alternativ ist eine Lösung, bei der die Wellenenden konstruktiv verdickt sind auf ein Maß, dass diese breiter ausbildet als die Führungsnuten und somit verhindert wird, dass diese aus diesen Führungsnuten abgleiten können. Eine vorteilhafte Bauform der Erfindung sieht hier beispielsweise vor, eine Kombination beider Lösungen anzuwenden, so dass an lediglich einem der abgewinkelten Wellenenden ein lösbarer Haltekörper und am zweiten Wellenenden eine Verdickung oder Verbreiterung vorgesehen ist, wodurch die Welle und daran angeordnet das Flammblech weiterhin aus dem Gasklappgrill entnommen werden kann.

Zentrales erfinderisches Merkmal ist somit das Flammblech, dass aus gelenkig verbundenen Flammblechelementen zusammengesetzt ist. Es ist in diesem Verbindungsbereich, der sich entlang der Längsachse des Flammblechs zentral erstreckt, eine Art Scharnier zur gelenkigen Verbindung offenbart, dass auf verschiedene konstruktive Weise gebildet werden kann. Zum einen wie bereits erläutert über eine durchgängige Welle, die in beispielsweise alternierend an den Flammblechelementen angeordnete, ineinandergreifende Führungshülsen verläuft und so eine Scharnierachse bildet, um die die Flammblechelemente gegeneinander abgewinkelt oder in einer planen Ebene zueinander verlaufen können.

Alternative Bauformen können allerdings neben der Welle, die durchgehend einteilig ausgebildet ist auch Wellenabschnitte bzw. Zapfen nutzen, die jeweils an den Enden des Flammblechs zum einen die Flammblechelemente durch Eingriff in die Scharnierhülsen gelenkig verbinden und zum anderen die Verbindung zu den stirnseitigen Seitenwänden durch Eingriff in die Führungsnuten herstellen.

Weiterhin kann die gelenkige Verbindung zwischen den Flammblechelementen auch durch Verbindungskörper hergestellt werden, die miteinander korrespondierend und ineinandergreifend an den Flammblechelementen angeordnet sind und ebenfalls sowohl die Verbindung der Flammblechelemente zum Flammblech bewirken als auch die Veränderung des Winkels zwischen den Flammblechelementen ermöglichen. Dies kann beispielsweise durch offene Scharnierhülsen erfolgen, die gegenüberliegend an den Flammblechelementen angeordnet sind und ineinandergesteckt werden.

Diese Verbindungsalternativen können auch in einer alternativen Bauform in Kombination verwendet werden, so dass beispielsweise offene Scharnierhülsen das Scharnier im Mittelbereich des Flammblechs bilden, an dessen Enden aber je eine Welle oder ein Zapfen in Führungshülsen eingreift.

Durch das bedienerfreundliche und schnelle Ab- und Aufbauen spart man Zeit und macht sich nicht mehr die Hände schmutzig. Die Seitenteile klappen zur Seite und Bodenplatte als auch Flammblech rutschen nach unten in ihre Position. Der Grill kann dadurch extrem platzsparend transportiert werden, da die Bodenbleche, Seitenteile, Flammblech und Rost direkt übereinander liegen und im Deckel verstaubar sind.

Zudem wird durch die weitere Ausgestaltung eines Deckels erreicht, dass das Grillrost im zusammengeklappten Zustand seine Position beibehält und nicht mit der Aufbewahrungstasche in Kontakt kommt, wodurch diese nicht verschmutzt werden kann. Der Klappgrill liegt so im zusammengeklappten Zustand mit den in der Regel durch die Benutzung verunreinigten Bauteilen des Flammblechs und Grillrosts in der Innenseite des Deckels, ohne mit der Aufbewahrungstasche in Kontakt zu kommen.

Weiterhin ist der Deckel als Grillgutablage oder Teller nutzbar.

Die Erfindung betrifft somit das sogenannte Flammblech oder auch Brennerschutzblech genannt, welches in seiner Ausführung es ermöglicht, einen dafür geeigneten zusammenklappbaren Gasgrill so auszustatten, dass dieser nach dem Zufügen des Brennerrohres sofort einsatzfähig ist, ohne diesen noch irgendwie aufbauen insbesondere ein Flammblech einbauen zu müssen. Ein Ab- und Aufbauen wie bei herkömmlichen zusammensteckbaren oder klappbaren Gasgrills, wie beispielsweise das Montieren eines Flammbleches und des Grillrosts entfällt dadurch.

Durch seine faltbare, vertikal variable Anordnung kann das Flammblech im Grill verbleiben, sodass wiederum der Grillrost ebenso nach der Benutzung im Gasklappgrill verbleiben kann. Dies ermöglicht einen Auf- und Abbau ohne mit den schmutzigen Teilen wie Grillrost oder Flammblech des Grills in Berührung zu kommen. Als sinnvolle Ergänzung wird noch ein Deckel mitverwendet, der den sauberen Auf- und Abbau gewährleistet und ebenso die Transporttasche vor dem schmutzigem Grillrost schützt.

Die Reinigung des Grills kann durch den sauberen schnellen Auf- und Abbau zu einem späteren, vorteilhafteren Zeitpunkt vollzogen werden. Dazu nimmt man den Deckel im aufgebauten Zustand nach oben ab, ebenso das Grillrost. Die zwei Seitenteile des Flammbleches lassen sich jeweils zu der gegenüberliegenden Seite oder senkrecht nach oben klappen, um z.B. die inneren Seitenwände oder den Boden reinigen zu können. Das Flammblech lässt sich aber auch ohne benötigtes Werkzeug durch einfaches Lösen einer Sicherungsmutter selbst als Ganzes komplett entnehmen, falls gewünscht.

Ein so ausgestatteter Gasgrill ist extrem bedienerfreundlich und ermöglicht ein sauberes, entspanntes Grillvergnügen, ohne sich oder die Transportasche schmutzig zu machen. Der zusammengelegte Grill hat die Größe eines ca. 2 cm dicken Buches, wodurch dieser sehr platzsparend zu transportieren ist.

Ein Ausführungsbeispiel des erfindungsgemäßen Gasklappgrill mit integriertem selbstausklappbarem Flammblechs wird anhand der Fig.1 bis Fig.6 näher erläutert. Es zeigen
- Fig.1: den Klappgrill mit eingesetztem Rohrbrenner 8, ausgeklappten Flammblech 9 und schwebend dargestellten Grillrost 10 und Deckel 1 in perspektivischer Ansicht;
- Fig.2: den im Deckel 1 zusammengeklappt aufgenommenen Faltgrill;
- Fig.3: eine Seitenansicht der Stirnseite des Flammfaltbleches 9 im flach auseinandergeklappten Zustand;
- Fig.4: eine Seitenansicht von der Stirnseite des Flammfaltbleches 9 im abgewinkelt geklappten Zustand;
- Fig.5: eine perspektivische Seitenansicht des nach unten abgewinkelten Flammbleches 9 mit Welle 7 und Sicherungsmutter 11 sowie
- Fig. 6: eine Draufsicht auf das Flammfaltbleches 9 im flach auseinandergeklappten Zustand.

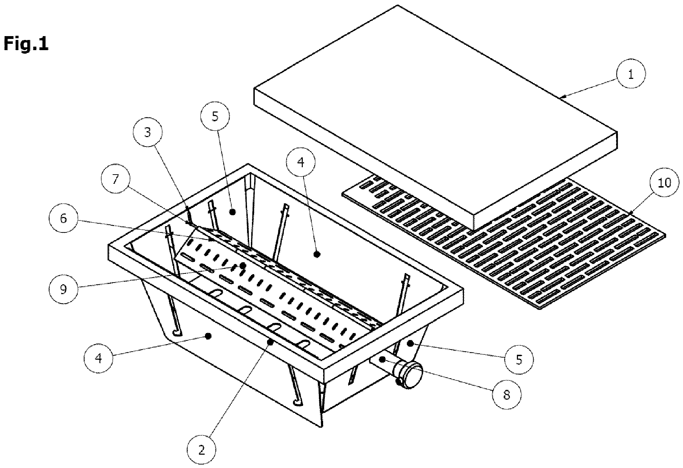

Aus Figur 1 ist erkennbar, dass der einsatzfähig aufgeklappte Gasgrill aus miteinander gelenkig verbundenen Bauteilen wie dem Rahmenelement 2, Seitenwänden 4 und stirnseitigen Seitenteilen 5 gebildet wird, wobei die erfindungsgemäße Bauform ein mittig positioniertes ausgeklapptes Flammblech 9 mit Scharnier 6 aufweist, das durch die Welle 7 in der Nut 3 fixiert ist. Diese Nuten 3 verlaufen in etwa vertikal in den gegenüberliegenden stirnseitigen Seitenteilen 5 und ermöglichen so eine vertikale Verschiebbarkeit der Welle 7 in diesen Nuten 3 zwischen einer oberen und einer unteren Position, was beim Auf- und Zusammenklappen des Grills relevant ist.

In Figur 1 ist zudem der eingeschobene Rohrbrenner 8 im Gasgrill dargestellt. Dieser wird seitlich durch eine Aufnahme in einem der stirnseitigen Seitenteile 5 des Klappgrills eingeschoben und an dem gegenüberliegenden stirnseitigen Seitenteil 5 abgestützt, beispielsweise ebenfalls durch eine Aufnahme oder eine geeignete Auflage, die in Figur 1 aber nicht erkennbar oder dargestellt ist. Wesentlich ist, dass dieser Rohrbrenner eine bewegliche bauliche Komponente des Klappgrills ist, die vor der Benutzung in die entsprechende Aufnahme eingeführt und vor dem Zusammenfalten wieder entnommen wird.

Seitlich neben dem Grill sind schwebend dargestellt der Grillrost 10 und der Deckel 1. Aus dem Deckel 1 wurde der zusammengefaltete Klappgrill sowie der Grillrost 10 vor der Benutzung entnommen. Der Grillrost 10 wird nun zur Benutzung in das Rahmenelemente 2 des Klappgrills eingesetzt, der Deckel 1 hat bei der Grillanwendung keine unmittelbare Funktion, kann aber als Ablage verwendet werden.

In Figur 1 wird bereits deutlich, dass das Flammblech 9 bei der auseinandergefalteten Position des Klappgrills um die zentrale Welle 3 abgewinkelt angeordnet ist. Hierbei wird zudem deutlich, dass das erfindungsgemäße Flammenblech zumindest aus 2 Flammenblechelementen zusammengesetzt ist, die um die zentrale Welle 3 gelenkig miteinander verbunden sind und bei der Grillanwendung eine winklig geneigte Position zueinander einnehmen und hierbei den Rohrbrenner 8 abdecken, um diesen zum einen vor Verunreinigungen zu schützen, und zum anderen die Verteilung der Gasflamme des Rohrbrenners zu regulieren.

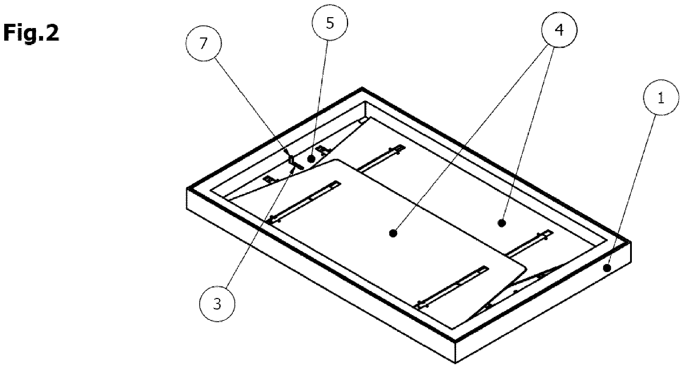

Fig. 2 zeigt den zusammengeklappten Gasgrill mit den ineinander gefalteten Bauteilen Rahmenelement 2, Seitenwände 4 und stirnseitige Seitenteile 5 und verdecktem Faltflammblech 9. Es ist zudem die in den Führungsnuten 3 in den stirnseitigen Seitenteilen 5 nach oben verschobene Welle 7 des Flammbleches 9 dargestellt. Diese Verschiebbarkeit der Welle 7 in den Führungsnuten 3 der stirnseitigen Seitenteile 5 ist hierbei eine wesentliche konstruktive Entwicklung, um durch das nun dauerhaft im Klappgrill verbaute Flammblech 8 nicht die Funktion der Zusammenfaltbarkeit des Grills zu behindern.

Vielmehr weicht beim Zusammenfalten des Klappgrills nun die Welle 7 mit daran angeordnetem Flammblech 8 nach oben aus und ermöglicht so das flache Anliegen der stirnseitigen Seitenteile beim Zusammenfalten im Deckel 1. Durch diese innovative Konstruktion ist es erst möglich, dass das Flammenblech dauerhaft im Grill verbleibt und sich flach an die anderen Zusammengefalteten konstruktiven Bauteile anlegt.

Aus Figur 2 wird zudem deutlich, wie vorteilhaft innenliegend in dem Deckel 1 der gesamte Klappgrill mit integriertem Flammenblech transportabel aufgenommen wird. Es ist hierbei nicht sichtbar, dass auch der Grillrost, der ja die nun nach unten weisende oberste Schicht des Klappgrills bildet, im geschlossenen Deckel 1 in unterster Position angeordnet ist und somit die Verunreinigungen, die ja primär an diesem Grillrost durch das Fett des Grillgutes und dessen Verbrennung beim Grillvorgang entstehen, nicht in Kontakt beispielsweise mit einer Transporttasche kommen können. Auch dies ist eine wesentliche Verbesserung in der praktischen Nutzung des Klappgrills.

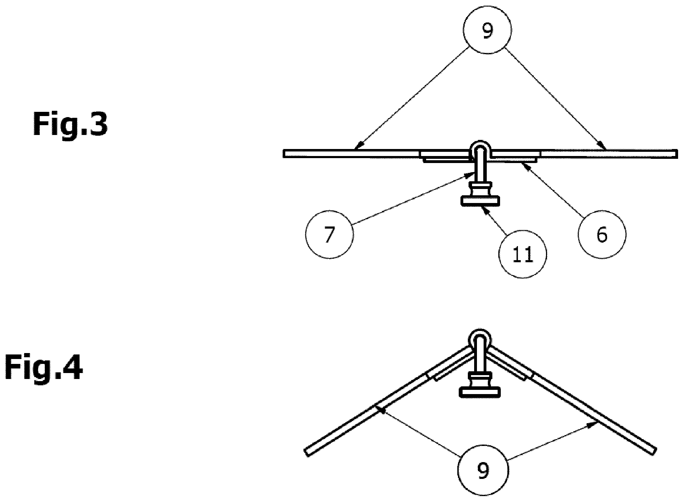

Fig.3 zeigt das klappbare Flammblech 9 in der flach gespreizten Position, welche es im eingeklappten Zustand des Klappgrills einnimmt. Hierbei kommt nun das flache Flammblech 9 durch das Anheben der stirnseitigen Seitenteile 5 des Klappgrills zum Anliegen an dem oberseitig abschließend im Rahmenelement 2 eingesetzten Grillrost 10.

Fig.4 zeigt das klappbare Flammblech 9 in der abgewinkelten Position, in nach unten geklapptem Zustand. Dies ist die Position, die das Flammenblech 9 beim Grillen einnimmt. Insofern ist auch der Rohrbrenner 8, der in dieser Figur nicht dargestellt ist, im Winkelbereich unter dem Flammenblech 9 parallel zum Verlauf der Welle 7 angeordnet. Es wird in Figur 4 deutlich, dass das Flammenblech 9 durch zwei flächige Bauteile gebildet ist, die durch ein Scharnier 6 verbunden sind, in dem die Welle 7 geführt ist und verläuft. Alternative Bauformen sind hierbei ebenfalls von der Erfindung umfasst, bei denen das Flammblech ggf. weitere konstruktive Unterteilungen und gelenkige Verbindungen aufweisen kann.

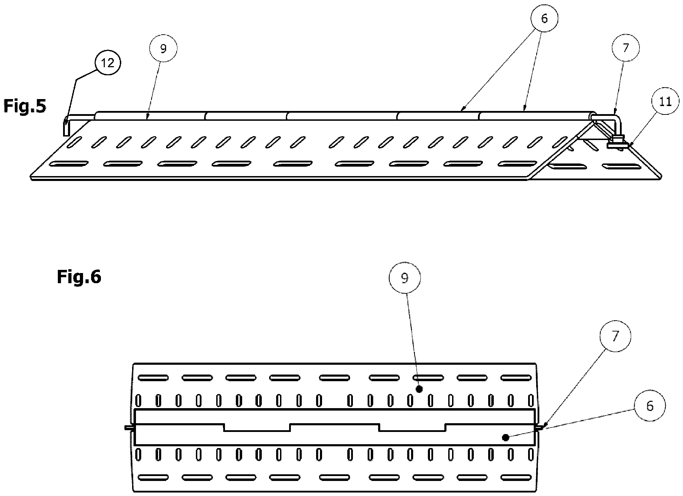

Fig.5 zeigt das abgewinkelt nach unten geklappte Flammblech 9 mit mittig gehaltenem Scharnier 6 und innenliegender metallischer Welle 7. Das einseitig montierte Fixierungselement 11 wird vorzugsweise als lösbare Mutter ausgebildet und fixiert die Welle 7 gegen ein Verrutschen aus der Nut 3.

Diese baulichen Komponenten des Flammenblechs 9 sind zudem in Figur 6 erkennbar, wobei das Flammenblech 9 mit dem die 2 Bauteile verbindenden Scharnier 6 dargestellt ist. Im Scharnier 6 geführt verläuft die Welle 7, um die die Abwicklung des Flammenblechs 9 erfolgt.

Eine zeichnerisch nicht dargestellte Alternative der Anbindung des faltbaren Flammblechs 9 an den Gasklappgrill ist, nicht die Welle 7 in den stirnseitigen Seitenteilen 5 des Klappgrills zu führen, sondern an den Enden des Faltblechs 9 Draht- oder Kettenverbindungen anzubringen, die das Faltblech 9 mit den stirnseitigen Seitenteilen 5 des Gasklappgrills verbinden. In der Funktion würde weiterhin das Faltblech 9 sich im zusammengelegten Gasklappgrill flach legen und bei ausgeklapptem Gasklappgrill einen definierten Klappwinkel aufweisen. Die Führung in Nuten in den stirnseitigen Seitenteilen 5 ist bei dieser Bauform nicht erforderlich.

Für diese alternative Bauform wäre weiterhin eine Entnahme des Flammblechs vorgesehen zur Reinigung oder auch Erneuerung, weshalb diese Draht- oder Kettenverbindungen mit dem Gasklappgrill lösbar ausgebildet sind.

### Bezugszeichenliste

- 1: Deckel
- 2: Rahmenelement des Klappgrills
- 3: Führungsnut für Welle
- 4: Seitenwände des Klappgrills
- 5: Stirnseitige Seitenteile des Klappgrills
- 6: Scharnier des Faltflammbleches
- 7: Metallische Welle
- 8: Gasbrennerrohr
- 9: Faltflammblech
- 10: Grillrost
- 11: Sicherungsmutter
- 12: Welle

## Patentansprüche

1. Gasklappgrill gebildet aus gelenkig miteinander verbundenen Bauteilen (2,4,5), einem Grillrost (10) sowie einem Flammenblech (9) oberhalb eines Gasbrenners (8),
**dadurch gekennzeichnet, dass**
- das Flammblech (9) aus zumindest zwei miteinander gelenkig verbundenen Flammenblechelementen gebildet ist,
- die mittels zumindest eines die Flammenblechelemente verbindenden Scharniers (6) gelenkig miteinander verbunden sind,
- wobei das Scharnier (6) aus an den Flammenblechelementen angeordneten und ineinandergreifenden Verbindungskörpern und/oder durch eine in Scharnierhülsen an den Flammenblechelementen geführte Welle gebildet wird.

2. Gasklappgrill nach Anspruch 1,
**dadurch gekennzeichnet, dass**
die Welle (7) in klappbaren Seitenwänden (5) des Gasklappgrills über Führungsnuten (3) beweglich gehalten wird.

3. Gasklappgrill nach Anspruch 1 oder 2,
**dadurch gekennzeichnet, dass**
sich das Flammblech (9) selbsttätig beim Aufklappen des Gasklappgrills aus einer flachen Transportposition in eine abgewinkelte Betriebsposition bewegt, in der die miteinander gelenkig verbundenen Flammenblechelemente um die im Scharnier (6) verlaufende Welle (7) und/oder die ineinandergreifenden Verbindungskörperabgewinkelt angeordnet sind.

4. Gasklappgrill nach Anspruch 2 oder 3,
**dadurch gekennzeichnet, dass**
- die Welle (7) in den Führungsnuten (3) der klappbaren Seitenwände (5) des Gasklappgrills zwischen einer oberen Einklappposition und einer unteren Betriebsposition verschiebbar geführt sind,
- wobei das Flammblech (8) bei zusammengeklapptem Gasklappgrill flach an den klappbaren Seitenwänden (5) anliegt.

5. Gasklappgrill nach einem der vorangegangenen Ansprüche,
**dadurch gekennzeichnet, dass**
- die Welle (7) beidseitig abgewinkelte Enden (12) aufweist,
- wobei zumindest an einem der abgewinkelten Enden (12) ein lösbarer Sicherungskörper (11) angeordnet ist, um die Welle 7 gegen ein Verrutschen aus der Nut (3) zu sichern.

6. Gasklappgrill nach Anspruch 5,
**dadurch gekennzeichnet, dass**
- die beidseitig abgewinkelten Enden (12) der Welle (7) bei aufgeklappten stirnseitigen Seitenwänden (5) in etwa parallel zu diesen in den Nuten (3) anliegen,
- und bei eingeklappten stirnseitigen Seitenwänden (5) in etwa rechtwinklig aus den Nuten (3) herausragen.

7. Gasklappgrill nach einem der vorangegangenen Ansprüche 5 oder 6,
**dadurch gekennzeichnet, dass**
die Welle (7) an einem der abgewinkelten Enden (12) gegenüber der Breite der Nut (3) verbreitert und/oder abgeflacht ausgebildet ist, um die Welle (7) gegen ein Verrutschen aus der Nut (3) zu sichern.

8. Gasklappgrill nach einem der vorangegangenen Ansprüche,
**dadurch gekennzeichnet, dass**
- ein geschlossener Deckel (1) bestehend aus einer Deckelfläche und einem umlaufenden Deckelrahmen zur Aufnahme des zusammengeklappten Gasklappgrill ausgebildet ist,
- wobei der Deckelrahmen den zusammengeklappten Gasklappgrill mit Grillrost (10) vollständig umschließt und die Bauhöhe des Deckelrahmens auf die Höhe des zusammengeklappten Gasklappgrills abgestimmt ausgebildet ist.

9. Gasklappgrill nach einem der vorangegangenen Ansprüche,
**dadurch gekennzeichnet, dass**
ein Rohrbrenner (8) als Gasbrenner in den Gasklappgrill lösbar eingesetzt ist und vom Flammblech (9) überdeckt wird.

10. Gasklappgrill nach Anspruch 9,
**dadurch gekennzeichnet, dass**
der Rohrbrenner (8) durch eine Aufnahme in einem stirnseitigen Seitenteil (5) in den Gasklappgrill lösbar eingesetzt und an dem gegenüberliegenden stirnseitigen Seitenteil (5) des Gasklappgrills lösbar gehalten ist.

11. Gasklappgrill nach einem der vorangegangenen Ansprüche,
**dadurch gekennzeichnet, dass**
die Welle (7) durchgehend einteilig ausgebildet ist oder aus zwei Wellenabschnitten besteht, die jeweils an den Enden des Flammblechs zum einen die Flammblechelemente durch Eingriff in Scharnierhülsen gelenkig verbinden und zum anderen die Verbindung zu den stirnseitigen Seitenwänden (5) durch Eingriff in die Führungsnuten (3) herstellen.

12. Gasklappgrill nach Anspruch 1,
**dadurch gekennzeichnet, dass**
das Flammblech (9) mittels Draht- oder Kettenverbindungen an klappbaren Seitenwänden (5) des Gasklappgrills beweglich angeordnet ist.

## Claims

1. Folding gas grill formed from components (2, 4, 5) which are connected to one another in an articulated manner, a grill grate (10) and a flame plate (9) above a gas burner (8),
**characterized in that**
- the flame plate (9) is formed from at least two flame-plate elements which are connected to one another in an articulated manner,
- which are connected to one another in an articulated manner by means of at least one hinge (6) connecting the flame-plate elements,
- wherein the hinge (6) is formed from interlocking connecting bodies which are arranged on the flame-plate elements and/or by a shaft guided in hinge sleeves on the flame-plate elements.

2. Folding gas grill according to Claim 1,
**characterized in that**
the shaft (7) is movably retained in foldable side walls (5) of the folding gas grill by way of guide grooves (3).

3. Folding gas grill according to Claim 1 or 2,
**characterized in that**,
when the folding gas grill is folded out, the flame plate (9) automatically moves from a flat transport position to an angled operating position in which the flame-plate elements, which are connected to one another in an articulated manner, are arranged at an angle around the shaft (7) running in the hinge (6) and/or around the interlocking connecting bodies.

4. Folding gas grill according to Claim 2 or 3,
**characterized in that**
- the shaft (7) is displaceably guided in the guide grooves (3) of the foldable side walls (5) of the folding gas grill between an upper folded-in position and a lower operating position,
- wherein the flame plate (8) lies flat against the foldable side walls (5) when the folding gas grill is folded up.

5. Folding gas grill according to any of the preceding claims,
**characterized in that**
- the shaft (7) has ends (12) which are angled on both sides,
- wherein a releasable securing body (11) is arranged at least at one of the angled ends (12) in order to secure the shaft (7) against slipping out of the groove (3).

6. Folding gas grill according to Claim 5,
**characterized in that**
- the ends (12) of the shaft (7), which are angled on both sides, lie in the grooves (3) approximately parallel to the end-side side walls (5) when the latter are folded out,
- and project approximately at right angles from the grooves (3) when the end-side side walls (5) are folded in.

7. Folding gas grill according to either of the preceding Claims 5 and 6,
**characterized in that**
the shaft (7) is widened and/or flattened at one of the angled ends (12) in relation to the width of the groove (3) in order to secure the shaft (7) against slipping out of the groove (3).

8. Folding gas grill according to any of the preceding claims,
**characterized in that**
- a closed cover (1) consisting of a cover surface and a peripheral cover frame is designed to accommodate the folded-up folding gas grill,
- wherein the cover frame completely encloses the folded-up folding gas grill with grill grate (10) and the height of the cover frame is matched to the height of the folded-up folding gas grill.

9. Folding gas grill according to any of the preceding claims,
**characterized in that**
a pipe burner (8) is releasably inserted as gas burner into the folding gas grill and is covered by the flame plate (9).

10. Folding gas grill according to Claim 9,
**characterized in that**
the pipe burner (8) is releasably inserted through a receptacle in an end-side side part (5) into the folding gas grill and releasably retained on the opposite end-side side part (5) of the folding gas grill.

11. Folding gas grill according to any of the preceding claims,
**characterized in that**
the shaft (7) is formed continuously in one piece or consists of two shaft portions, which, in each case at the ends of the flame plate, connect the flame-plate elements in an articulated manner by engagement in hinge sleeves and also produce the connection to the end-side side walls (5) by engagement in the guide grooves (3).

12. Folding gas grill according to Claim 1,
**characterized in that**
the flame plate (9) is movably arranged on foldable side walls (5) of the folding gas grill by means of wire or chain connections.

## Revendications

1. Gril pliant au gaz composé de composants (2, 4, 5) reliés entre eux de manière articulée, d'une grille (10) de gril et d'une plaque de flamme (9) au-dessus d'un brûleur à gaz (8),
**caractérisé en ce que**
- la plaque de flamme (9) est formée à partir d'au moins deux éléments de plaque de flamme reliés entre eux de manière articulée,
- qui sont reliés l'un à l'autre de manière articulée au moyen d'au moins une charnière (6) reliant les éléments de plaque de flamme,
- la charnière (6) étant formée à partir de corps de liaison disposés sur les éléments de plaque de flamme et imbriqués les uns dans les autres et/ou par un arbre guidé dans des manchons de charnière sur les éléments de plaque de flamme.

2. Gril pliant au gaz selon la revendication 1,
**caractérisé en ce que**
l'arbre (7) est maintenu de manière mobile dans des parois latérales (5) pliables du gril pliant au gaz par des rainures de guidage (3).

3. Gril pliant au gaz selon la revendication 1 ou 2,
**caractérisé en ce que**
lors du dépliage du gril pliant au gaz, la plaque de flamme (9) se déplace automatiquement d'une position de transport plate dans une position de fonctionnement coudée, dans laquelle les éléments de plaque de flamme reliés entre eux de manière articulée sont disposés de manière coudée autour de l'arbre (7) s'étendant dans la charnière (6) et/ou des corps de liaison imbriqués.

4. Gril pliant au gaz selon la revendication 2 ou 3,
**caractérisé en ce que**
- l'arbre (7) est guidé dans les rainures de guidage (3) des parois latérales (5) pliables du gril pliant au gaz de manière à pouvoir coulisser entre une position de rabattement supérieure et une position de fonctionnement inférieure,
- la plaque de flamme (8) reposant à plat sur les parois latérales (5) pliables lorsque le gril pliant au gaz est replié.

5. Gril pliant au gaz selon l'une des revendications précédentes,
**caractérisé en ce que**
- l'arbre (7) comporte des extrémités (12) coudées des deux côtés,
- un corps de blocage (11) amovible étant disposé au moins sur une des extrémités (12) coudées pour empêcher l'arbre (7) de glisser hors de la rainure (3).

6. Gril pliant au gaz selon la revendication 5,
**caractérisé en ce que**
- les extrémités (12) de l'arbre (7) coudées des deux côtés reposent dans les rainures (3) sensiblement parallèlement à celles-ci lorsque les parois latérales (5) côté frontal sont dépliées,
- et, lorsque les parois latérales (5) côté frontal sont rabattues, font saillie hors des rainures (3) approximativement à angle droit.

7. Gril pliant au gaz selon l'une des revendications précédentes 5 et 6,
**caractérisé en ce que**
l'arbre (7) est formé de manière élargie et/ou aplatie sur une des extrémités (12) coudées par rapport à la largeur de la rainure (3) pour empêcher l'arbre (7) de glisser hors de la rainure (3).

8. Gril pliant au gaz selon l'une des revendications précédentes,
**caractérisé en ce que**
- un couvercle fermé (1) constitué d'une surface de couvercle et d'un cadre de couvercle périphérique est formé pour recevoir le gril pliant au gaz replié,
- le cadre de couvercle entourant complètement le gril pliant au gaz replié avec la grille (10) de gril et la hauteur totale du cadre de couvercle étant formée pour être adaptée à la hauteur du gril pliant au gaz replié.

9. Gril pliant au gaz selon l'une des revendications précédentes,
**caractérisé en ce que**
un brûleur tubulaire (8) est inséré de manière amovible en tant que brûleur à gaz dans le gril pliant au gaz et est recouvert par la plaque de flamme (9).

10. Gril pliant au gaz selon la revendication 9,
**caractérisé en ce que**
le brûleur tubulaire (8) est inséré de manière amovible dans le gril pliant au gaz par un logement dans une partie latérale (5) côté frontal et est maintenu de manière amovible sur la partie latérale (5) côté frontal du gril pliant au gaz.

11. Gril pliant au gaz selon l'une des revendications précédentes,
**caractérisé en ce que**
l'arbre (7) est formé en continu d'une seule pièce ou est constitué de deux sections d'arbre qui, d'une part, relient de manière articulée les éléments de plaque respectivement sur les extrémités de la plaque de flamme par une prise avec les manchons de charnière et établissent, d'autre part, la liaison avec les parois latérales (5) côté frontal par une prise avec les rainures de guidage (3).

12. Gril pliant au gaz selon la revendication 1,
**caractérisé en ce que**
la plaque de flamme (9) est disposée de manière mobile sur des parois latérales (5) pliables du gril pliant au gaz au moyen de liaisons par fil ou par chaîne.
